# EUROPEAN PATENT APPLICATION

(11) **EP 4 840 794 A2**
(43) Date of publication of application: **18.11.2026**
(21) Application number: 26208394.2
(22) Date of filing: 17.12.2014
(51) Int. Cl.: B65D 85/804

(54) **CAPSULE AND DEVICE FOR PREPARING BEVERAGES AND METHOD FOR MANUFACTURING A CAPSULE**

(30) Priority: 23.05.2014 NL 2012879; 21.07.2014 WO PCT/IB2014/063283
(62) Document number(s) of the earlier application(s) in accordance with Art. 76 EPC: 24188990.6 / 4 480 852; 20213911.9 / 3 831 744; 14891589.5 / 3 145 838
(71) Applicant: OX Barrier B.V., 3911 AV Rhenen (NL)
(72) Inventor: ANDREAE, Jan, deceased (NL); KLEP, Mark Eric Anton Arthur, 4281 NJ Andel (NL); ZWEED, Sander Gordon, 4053 HX IJzendoorn (NL)
(74) Representative: Patentwerk B.V.

(57) **Abstract**

The invention relates to a capsule for use in a device for preparing beverages. The invention next relates to a method for manufacturing a capsule according to the invention. The invention further relates to an assembly of such a capsule and a device for preparing beverages.

## Description

The invention relates to a capsule for use in a device for preparing beverages. The invention also relates to a closing element for use in a capsule according to the invention. The invention next relates to a method for manufacturing a capsule according to the invention. The invention further relates to an assembly of such a capsule and a device for preparing beverages.

Various capsules for use in a device for preparing beverages are known in the prior art. A known capsule, as described for example in EP0512468, comprises an essentially frustoconical housing composed of a peripheral wall, an end inlet side connected to the peripheral wall, and an engaging edge connected laterally to the peripheral wall for clamping the capsule into a capsule holder of the device for preparing beverages. The engaging edge is connected to a perforable film that also forms the outlet side of the capsule. The housing is filled with a substance to be extracted, such as ground coffee beans. This known capsule can be placed in a device for preparing a beverage. For this purpose, the capsule is placed in a capsule holder, into which the capsule is then clamped, thus causing the inlet side of the capsule to be perforated. After this, warm water at fairly high pressure (6-20 bar) is to be fed into the capsule holder and thus into the capsule via the inlet side, where the water is to come into contact with the substance, thus forming the final beverage. The pressure build-up in the capsule is to cause the film to be deformed in such a way that the film is perforated by the capsule holder, with the result that the formed beverage can leave the capsule. The housing of the capsule described in the aforementioned patent is composed of aluminium. Although aluminium has fairly favourable barrier properties, allowing it to preserve the coffee for a long period of time, the processing of aluminium is fairly problematic. Moreover, the capsule is to be discarded after use, generally by means of standard waste disposal, which leads to considerable environmental pollution.

An objective of the invention is to provide a fairly reliably functioning capsule for preparing beverages which, particularly after use, leads to reduced environmental pollution.

For this purpose, the invention thus provides a capsule of the type mentioned initially, comprising an essentially closed housing that is at least partially filled with a substance to be extracted and/or dissolved, such as ground coffee, for preparing a beverage, with the housing being essentially closed, in which the housing is at least defined by a peripheral wall, an end side connected to the peripheral wall, and a laterally protruding engaging edge connected to the peripheral wall at a distance from the end side in order to allow the capsule to be clamped into a capsule holder of a device for preparing beverages; and at least one essentially closed closing element connected to the laterally protruding engaging edge for sealing the substance into the capsule in order to preserve it, wherein at least a part of the closing element is composed of a laminated film, which film comprises at least one oxygen barrier layer, which barrier layer is essentially impermeable to oxygen, and which film comprises at least one carrier layer connected to the oxygen barrier, wherein at least one carrier layer is provided with at least one weakened area. The film is preferably made essentially solely of plastic. For this purpose, the film is preferably composed of a plurality of polymer layers, including the oxygen barrier layer and the at least one carrier layer. Preferably, no metal layer is applied in the film. The oxygen barrier layer makes it possible to preserve, in an oxygen-free or low-oxygen manner, the substance contained in the capsule, generally ground coffee, tea leaves, instant soup, or (chocolate) milk powder for preparing coffee, soup, tea or (chocolate) milk respectively. The oxygen barrier layer is generally configured in a completely closed manner. Preferably, the closed oxygen barrier layer is not weakened in order to make it possible to keep the oxygen barrier as favourable and uniform as possible. It is preferred in this case that the oxygen barrier have an essentially uniform layer thickness. The at least one carrier layer is configured to carry, hold in place, and support the - generally thinner - oxygen barrier layer. At least one carrier layer is provided with at least one (previously formed) weakened area, with the result that the carrier layer is weakened. This weakened area can be formed in various ways, as will be explained in further detail below. The weakened area serves to allow the film to tear in a simple, and preferably controlled, manner, when the capsule is used in a device for preparing beverages. If no weakened area is formed, a plastic (multilayer) film tends to stretch rather than tear, which can make opening of the capsule on the outlet side considerably more difficult and even impossible. Because of the (site-selective) weakened area in at least one carrier layer, tearing of the film is made considerably easier, and in general, the tearing behaviour of the film will essentially be consistent with the tearing behaviour of a classic aluminium-based film.

The film may conceivably comprise a plurality of carrier layers. It is also conceivable that the plurality of carrier layers of the film may be configured in weakened form. This makes it possible to keep the film sufficiently easy to tear while providing each carrier layer with its own functionality. For example, it is conceivable that each carrier layer could directly or indirectly play a role in supporting the oxygen barrier layer, with, for example, at least one first carrier layer functioning primarily as a carrier, while at least one other carrier layer functions more as a moisture barrier. It is preferred that at least two of the weakened film layers be adjacent to one another. More preferably, the weakened areas of the adjacent layers should be in line with one another. This can be carried out fairly easily by application of a heated stamp or laser that simultaneously processes the aforementioned carrier layers. Application of a stamp results in reduced local (site-selective) layer thickness, and thus a weakened area of the film layer.

However, it is preferred that the at least one weakened carrier layer be configured with perforations. The openings made in the at least one carrier layer are preferably composed of microperforations. In this case, it is preferred for these openings to completely penetrate the at least one carrier layer. The (micro)perforation can fairly easily be formed by application of a laser that burns the perforation into the at least one polymer carrier layer. In this case, the intensity and wavelength of the laser can be adjusted in such a way that only the one or plurality of superposed carrier layers are perforated and the underlying oxygen barrier layer (and other layers if applicable) are not damaged by the laser. It is preferred in this case that the perforations be made in a pattern in the at least one weakened carrier layer. Preferably, this pattern extends over the entire surface that is limited by the inner periphery of the lateral engaging edge, and therefore over the complete outlet side of the capsule. Experiments have shown that the controlled tearing of the film can best be achieved if the pattern is composed of a plurality of broken lines (dashed lines) essentially oriented in parallel. The perforations configured in succession forming a continuous line segment are preferably designed in an elongated manner, and it is particularly preferred if they are essentially rectangular. Such a design facilitates tearing of the film, wherein the film is to tear at the sites of the lines, with the lines determining the de facto location of the tearing seams. This facilitates controlled tearing of the film. Alternative tearing patterns can for example be achieved by forming of cross-shaped and/or square weakened areas. A rectangular weakened area is also preferred to a rounded weakened area, as an angled weakened area will allow the carrier layer in question to tear more quickly.

In an alternative variant embodiment, at least one carrier layer is configured in a weakened manner by pre-damaging the at least one carrier layer, preferably a frontal side thereof, with the result that tearing of the carrier layer is also facilitated. Damaging of the carrier layer can be carried out, for example, by tearing of the carrier layer and/or etching of the carrier layer.

Preferably, at least one weakened carrier layer faces toward the substance held in the housing. This weakened carrier layer is the first layer to be exposed to pressure build-up in the capsule. Because of the applied weakening, this (innermost) layer is also the first layer that can tear on pressure build-up in the capsule during injection of water into the capsule (generally via the end side of the housing), with the result that the beverage can be displaced through this innermost layer. As the layers of the film are preferably integrally connected to one another, thus forming a composite, tearing of the innermost layer will fairly quickly lead to tearing of the other layers according to the same tearing pattern. Integral binding of the film layers to one another can be carried out by welding/melting the various film layers together and/or by gluing the film layers together.

Under the effect of the pressure build-up in the capsule, the closing element is deformed and finally undergoes controlled tearing during interaction of the deformed film with a perforation structure of a device for preparing beverages such as a coffee machine. At higher temperatures of between 90 and 100 °C, which are generally applied in extracting and/or dissolving the substance, it is specifically the oxygen barrier layer that tends to tear out and form around and/or over the perforation structure of the coffee machine instead of tearing and/or being perforated. By connecting the oxygen barrier layer to the at least one weakened carrier layer, one can force controlled rupturing of the oxygen barrier layer to occur, which facilitates the preparation process of the beverage.

The film should preferably be essentially fully compostable. As the capsule is manufactured from one of a plurality of (biologically) compostable materials, the capsule is to be discarded after use, preferably in VFG waste (vegetable, fruit, and garden waste), after which the capsule is biodegraded on the molecular level by micro-organisms, if applicable after application of activation heat and moisture (water). In this case, it is also preferred to manufacture the capsule components from biomaterials ("bio based materials"), which are materials originating from living or formerly living organisms, as this further increases the durability of the capsule and further reduces environmental pollution. In this process, organic molecules, of which the capsule is essentially composed, are converted into smaller organic molecules, and finally into water, carbon dioxide, and biomass (humus), and possible mineral components such as salts. In industrial composting facilities, the entire composting process generally requires several weeks. This type of composting process is also referred to as biodegradation. Manufacturing of all of the components of the capsule from fully compostable materials provides a considerable benefit with respect to environmental pollution. This provides a solution in the ongoing efforts to keep the discharge of waste to a manageable level and deal responsibly with residual waste. In addition to the reduction in environmental pollution accompanying use of the capsule according to the invention, the essentially closed capsule is extremely well-suited for allowing the substance, generally coffee, to be preserved for long periods of time by using an oxygen barrier, preferably in both the housing and the closing element. For this reason, no separate packaging is required in order to maintain the quality of the substance, specifically coffee.

The oxygen barrier layer is preferably at least partially manufactured from a material selected from the group composed of polyvinyl alcohol (PVOH), polyvinylpyrrolidone (PVP), and polyvinyl acetate (PVAc). PVOH is generally the most preferred of these substances, as PVOH can be fairly easily applied as a sealed oxygen-impermeable film and has favourable adhesion properties. The oxygen barrier layer is preferably composed of a hybrid coating of an organic phase, for example by application of at least one of the aforementioned components, and an inorganic fraction that functions as a precursor. More preferably, the inorganic fraction is composed of silicon alkoxide (Si(OR)4), wherein R denotes an organic tail derived from one of the aforementioned organic molecules. Such hybrid coatings generally show particularly favourable composting properties, and also possess satisfactory impermeability to oxygen. As a less environmentally-friendly alternative, the oxygen barrier layer may also be composed of, for example, polyvinylidene chloride (PVdC), ethene vinyl alcohol (EVOH), or a metal oxide such as SiO₂ or Al₂O₃.

The oxygen barrier layer is preferably also essentially impermeable to water vapour. For example, when the capsule is provided with ground coffee, it is undesirable for water to come into contact with the coffee before the capsule is used to make the coffee. If water vapour reaches the ground coffee before the coffee is prepared, the ground coffee will absorb the water vapour and the machine will turn off. This adversely affects the quality of the coffee. This can also cause the extraction or the infusion process to be disturbed at a later time. However, the oxygen barrier layer, including for example a PVOH-based oxygen barrier layer, is usually highly moisture-sensitive, with the result that the moisture-sensitive oxygen barrier will generally disintegrate fairly rapidly and easily on contact with moisture (water). For this reason, it is particularly preferable if the oxygen barrier layer is surrounded (sealed in) on at least one side, and preferably two sides, by at least one shielding material layer that completely shields the oxygen barrier from the (moisture-containing) atmosphere surrounding the capsule. The surrounding atmosphere is understood to refer to the ambient air that surrounds the capsule. In this case, the surrounding material layer is manufactured from a material that is relatively insensitive to moisture and is relatively stable in a moist environment, and will therefore not readily disintegrate or degrade on contact with moisture. Preferably, this material layer that shields and therefore protects the oxygen barrier should be completely or at least highly impermeable to moisture, with said shielding material layer thus functioning as a kind of moisture barrier layer, with the result that moisture cannot or at least cannot rapidly and easily come into contact with the underlying moisture-sensitive oxygen barrier layer. This leaves the oxygen barrier layer intact and makes the capsule and the contents thereof more durable. In this case, complete shielding by the oxygen barrier layer from the outside world (the immediate environment) is preferred. At least one shielding material layer, which also can function as a weakened or non-weakened carrier layer, is positioned on at least one outer side of the film in order to function as a partition between the moisture-sensitive oxygen barrier layer and the immediate environment of the film.

A suitable material for such a shielding (carrier) layer is cellulose. Cellulose is generally (semi)transparent. One could therefore conceivably apply an image that is visible to the user or a visible pattern, motif, design, text, and/or piece of information between the oxygen barrier layer and the shielding transparent or semitransparent layer, for example by application of ink, in particular by means of a printing process. In this manner, the capsule can be effectively personalised and/or characterised, thus making it informative, recognisable, and/or attractive in nature.

In a preferred embodiment, the film comprises at least one carrier layer that is composed of a non-woven fabric (non-woven) and/or a woven fabric (woven). The layer composed of a non-woven fabric (non-woven) and/or a woven fabric (woven) is manufactured, for example, from polylactic acid (PLA) and/or cellulose. Polylactic acid and cellulose are both compostable materials, with the result that the capsule can be discarded after use and biodegraded. Moreover, both materials are relatively impermeable to moisture. The layer composed of a non-woven fabric (non-woven) and/or a woven fabric (woven) preferably faces toward the substance enclosed in the capsule. The layer serves to stiffen the film as such, having an open structure by nature, and is therefore already configured in a weakened state and can tear fairly easily. The non-woven and/or woven layer can also serve as a filter so that ground coffee particles in the capsule cannot leave the capsule, while fluid (water) is allowed to penetrate. The layer composed of a non-woven fabric (non-woven) and/or a woven fabric (woven) can be glued to the oxygen barrier layer, for example by application of an essentially fully compostable glue, preferably manufactured from polylactic acid (PLA). PLA is a compostable material, with the result that the capsule can be discarded after use and biodegraded. The glue layer preferably has a thickness of approximately 2 microns.

The film comprises for example at least one additional carrier layer connected to the side of the barrier layer facing away from the layer composed of a non-woven fabric (non-woven) and/or a woven fabric (woven). The additional carrier layer serves to stiffen and protect the film, particularly the oxygen barrier layer, and is therefore preferably configured on the outer edge of the film. The carrier layer is for example at least partially composed of polylactic acid (PLA) and/or cellulose. Polylactic acid and cellulose are both compostable materials, with the result that the capsule can be discarded after use and biodegraded.

Preferably, at least one carrier layer should be applied between the carrier layer composed of the non-woven fabric (non-woven) and/or the woven fabric (woven) on the one hand and the oxygen barrier layer on the other. This imparts more stiffness to the film as such. More preferably, this interposed carrier layer is weakened, and more particularly perforated, which will generally facilitate controlled tearing of the film during use of the capsule.

The engaging edge of the capsule is generally connected to an end of the peripheral wall facing away from the end side (bottom). In this manner, an asymmetrical capsule is obtained in case the symmetrical surface of the capsule is secured by the peripheral edge (flange). In general, the peripheral wall should have an essentially frustoconical design so that the capsule can be applied in known devices for preparing beverages. The housing is preferably essentially rigid (shape-retaining). With respect to design, the capsule should preferably be consistent with the capsule described in the above-referenced patent EP0512468.

Preferably, the housing is composed of a laminate of a plurality of material layers. In this case, each material layer should preferably be essentially compostable. By applying a laminate of material layers, it is possible to efficiently provide the housing with the desired properties. For example, at least one material layer may form a barrier layer against oxygen and/or water (vapour). One may use e.g. a plurality of synthetic or natural polymers such as nitrocellulose, polysaccharides such as hydroxyethylcellulose, polyvinyl alcohol (PVOH), or ethylene vinyl alcohol (EVOH), polylactic acid (PLA), polyvinylidene chloride (PVDC), chitosan, carboxymethylcellulose, polyacrylate, polyglycolide, polybutylene succinate (PBS), acrylonitrile-butadiene-styrene (ABS), polyolefins, polyester, co-polyesters, polyamide, PLA/caprolactone copolymers, polyhydroxyalkanoates, biodegradable polyethylene (PE), polypropylene (PP), polybutene (PB) and copolymers and mixtures thereof, optionally mixed with starch. A barrier layer for oxygen comprising a plurality of synthetic or natural polymers may further include a crosslinker such as silane, glyoxal, melamine resin, and the like. This barrier layer for oxygen is preferably composed of compostable material, and natural polymers such as starch and chitosan and synthetic polymers such as PVOH, EVOH, and PLA are therefore preferred. In one embodiment, the material layer also comprises a wax and/or a filler, such as clay, which further strengthens the barrier function. Where applicable, the polymer is dispersed or dissolved in an aqueous or other solvent-based medium, with said medium containing inorganic particles. Such inorganic particles are preferably composed of inorganic layered or plate-like particles containing natural or synthetic clay minerals such as mica, kaolinite, vermiculite, halloysite, montmorillonite, and the like. Where applicable, a metallised film may also be used as an oxygen barrier and/or a water (vapour) barrier in the housing. For this purpose, an aluminium coating is preferably applied to a preformed material layer of the laminate. It is also conceivable to use a plurality of oxygen barriers, which can optionally be applied on top of one another. For example, it is conceivable to coat a PVOH layer with an aluminium coating. In this manner, a multiple oxygen barrier is produced. A further material layer of the laminate can optionally function as a shielding coating and/or a coloured layer in order to impart a desired colour to the housing of the capsule. An example of such a layer is composed of a compostable polymer selected from the group composed of compostable polyesters, PLA, polyhydroxyalkanoates, polycaprolactones, polybutylene succinate adipate, polybutylene adipate co-terephthalate, PLA/caprolactone copolymers, biodegradable polyethylene, and nitrocellulose.

All of the aforementioned material layers are preferably composed of a compostable material. The oxygen-impermeable barrier layer is generally sensitive to water, with the result that the barrier layer should preferably be shielded from water (vapour) by enclosing said barrier layer in at least two surrounding (waterproof) material layers. The material layers of the laminate are preferably welded or glued to one another by application of an essentially fully compostable glue.

An example of a compostable glue that can be used both in the housing and in the closing element concerns glue containing 1 to 70 wt% of a compostable polymer selected from the group composed of an aliphatic or partially aromatic polyester and a thermoplastic aliphatic polyester urethane. Another example of a compostable glue is composed of biodegradable acryl polymers, biodegradable polyesters, PLA, polyhydroxyalkanoates, polycaprolactones, polybutylene succinate adipate, polybutylene adipate co-terephthalate, PLA/caprolactone copolymers, starch, hydrocarbon resins, and of course pine resin. Preferably, the compostable glue contains a biodegradable acryl polymer or a polycaprolactone-based hot melt adhesive.

If applicable, the compostable glue also comprises an adhesiveness-imparting agent such as a resin. Such an adhesiveness-imparting agent preferably contains a vegetable resin such as a colophonium and phenol resin, a terpene polymer such as a terpene-phenol resin and aromatic modified terpene resin, a styrene resin, coumarone/indene resin, an alkyl phenol resin, a xylene resin, a C5 type petroleum resin, a C9 type petroleum resin, and an alicyclic hydrogenated resin. Preferably, the adhesiveness-imparting agent comprises a vegetable resin such as a colophonium, and/or a terpene polymer, in view of the fact that such adhesion-imparting agents show favourable adhesive strength in combination with the compostable polymer present in the compostable glue.

The capsule as such is preferably made essentially solely of a compostable bio based material, such as biodegradable biopolymers, (recycled) paper and/or cardboard and synthetic biodegradable polymers. Biodegradable polymers preferably include biodegradable polyesters, PLA, polyhydroxyalkanoates, polycaprolactones, polybutylene succinate adipate, polybutylene adipate co-terephthalate, PLA/caprolactone copolymers, biodegradable polyethylene, and nitrocellulose. PLA can comprise both the L-enantiomer (PLLA homopolymer) and the D-enantiomer (PDLA homopolymer).

In a particularly preferable embodiment, the capsule is manufactured from a bio based polymer (biopolymer). This relates to materials which are manufactured from biologically renewable (recyclable) raw materials. This therefore concerns the origin of the materials. Examples are bioplastics, a term used to refer to plastics made from natural products, such as starch obtained from potatoes or corn, and also from cellulose. These are in fact artificial biopolymers. Biopolymers can be selected from carbohydrates, polysaccharides (for example cellulose, starch, glycogen, hemicellulose, chitin, fructan inulin, lignin, and/or pectin substances), rubbers, proteins, possibly grains, vegetables and/or animal proteins (such as gluten, whey proteins, and/or gelatine), colloids (such as hydrocolloid, for example natural hydrocolloid such as rubbers), other polyorganic acids (such as PLA, polyglycolide and polyhydroxyalkanoate (PHA)), and mixtures and/or modified derivates thereof.

The bio based materials can be renewed (recycled) after use, but they can also be composted. As mentioned above, composting relates to the microbiological breakdown of the materials from which the capsule is manufactured in a relatively short period of time into at least water, carbon, and biomass (humus), and possibly methane. Preferably, materials, particularly polymers, are used which under strict conditions (with respect to temperature, moisture, time, etc.) within a maximum of 6 months are converted into water, carbon dioxide, biomass, and methane. These polymers meet the requirements of EN13432, an international standard for compostable polymers. This standard defines both the test programme and the evaluation criteria which must be met by compostable packaging, as well as the speed and extent to which a biodegradable polymer must degrade under commercial composting conditions. Whether or not a polymer product is compostable depends among other factors on the product geometry and possible additives, such as for example talc, compostable plasticisers including glycerine, and/or compostable filling materials, including starch.

Where applicable, the capsule is manufactured from cellulose, such as regenerated cellulose, cellophane, and/or cellulose diacetate. In cases where the housing and/or the closing element is at least partially manufactured from cellulose, the type of cellulose used should be able to withstand relatively high temperatures up to the boiling point of water. For this reason, the capsule is preferably manufactured from a composition comprising at least 20 to 90 wt% of cellulose ester, wherein the percent by weight is calculated with respect to the weight of the total composition, at least 15 to 50 wt% (w/w) of a plasticiser, wherein the percent by weight is calculated with respect to the weight of cellulose ester present in the composition and at least 5 to 70 wt% of an organic filler, wherein the percent by weight is calculated with respect to the weight of the total composition.

The plasticisers are preferably selected from the group comprising glycerine, triacetin, triethylene glycol, triphenylphosphate, polyethylene glycol, propylene glycol, ethyl lactate, methyl lactate, glycerol triacetate, acetyl tributyl citrate, triethyl citrate, diethyl citrate, glycerol acetate, phthalate, sorbitol, maltitol, xylitol, erythritol, fatty acid esters, and mixtures thereof. Preferably, the filler comprises silicate such as talc.

Preferably, the capsule, i.e. the housing and/or the closing element, is at least partially manufactured from polylactic acid or a derivative thereof. The polylactic acid can optionally be mixed with a starch in order to improve the speed of decomposition of the material. Where applicable, the layer composed of polylactic acid comprises approximately 2% (w/w) to approximately 20% (w/w) of starch. In a variant embodiment, the polylactic acid also comprises a transition metal stearate such as a stearate salt of aluminium, antimony, barium, bismuth, cadmium, cerium, chromium, cobalt, copper, gallium, iron, lanthanum, lead, lithium, magnesium, mercury, molybdenum, nickel, potassium, rare earth metals, silver, sodium strontium, tin, tungsten, vanadium, yttrium, zinc, and zirconium. Where applicable, the layer composed of polylactic acid comprises approximately 0.5% (w/w) to approximately 5% (w/w) of a metal stearate. In cases where the housing and/or the closing element is at least partially manufactured from polylactic acid (PLA), the polylactic acid should be able to withstand relatively high temperatures of up to the boiling point of water. However, a pure polylactic acid is generally not suitable for use due to the relatively low glass transition temperature (T_{g}) of 50° C. Moreover, polylactic acids, particularly the homopolymers PDLA and PLLA, show a relatively low crystallisation rate, which is generally too slow to allow sufficient crystallisation during production of the relevant component(s).

For this reason, it is advantageous if the material used is a liquid polylactic acid composition that comprises at least 94% (w/w) of acidic components. It has been found that such a liquid polylactic acid composition does not crystallise above a temperature of 10 °C. Such a liquid polylactic acid composition can therefore be used to form a polylactic acid material layer which can withstand relatively high temperatures of up to the boiling point of water. Preferably, the composition comprises a total concentration of acidic components of at least 95% (w/w), and more preferably, the concentration of acidic components is at least 96% (w/w), 97% (w/w), 98% (w/w), or 99% (w/w). Particularly favourable properties are obtained if the liquid polylactic acid composition contains a total concentration of acidic components of 100% (w/w). It has also been found that it is advantageous if the material used has a composition comprising: a compostable resin of PLLA with a limited fraction (≤ 5 mol%) of PDLA, enriched with at least one nucleating agent. Preferably, the nucleating agent comprises a combination of (i) preferably between 0 and 25 wt% of an inorganic nucleating agent, preferably talc, and (ii) preferably between 0 and 30 wt% of an inorganic filler, preferably with a lamellar, preferably a clay mineral, in particular an aluminium mineral such as kaolin. The housing and the closing element can be manufactured from essentially the same material composition. In this case, the common main component is preferably composed of PLA and/or cellulose. If applicable, the PLA may be plate-selectively enriched with one of a plurality of additives, in order for example to allow regulation of thermal resistance and/or the elastic modulus. An additional advantage of manufacturing the housing and the closing element from the same polymer is that both components can be fused to one another, with the result that no glue is required.

The invention also relates to a closing element for use in a capsule according to the invention, wherein at least a part of the closing element is composed of a laminated film, which film comprises at least one oxygen barrier, which barrier layer is essentially impermeable to oxygen, and which film comprises at least one carrier layer connected to the oxygen barrier layer, wherein at least one carrier layer is provided with at least one weakened area.

The invention also relates to a method for manufacturing a capsule for preparing beverages, particularly a capsule according to the invention, comprising the steps: A) manufacturing of a housing of the capsule from at least one compostable material, wherein the housing is essentially closed, and wherein the housing is defined at least by a peripheral wall, an end side connected to the peripheral wall, and a laterally protruding engaging edge connected to the peripheral wall at a distance from the end side in order to allow the capsule to be clamped into a capsule holder of a device for preparing beverages; B) manufacturing of a laminated film, which film comprises at least one oxygen barrier layer, which oxygen barrier layer is essentially impermeable to oxygen, and which film comprises at least one carrier layer connected to the oxygen barrier layer, wherein at least one carrier layer is provided with at least one weakened area, and C) at least partial filling of the housing with a substance to be extracted and/or dissolved, such as ground coffee, for preparing a beverage; and D) connecting of the closing element to the housing in such a way that the substance is enclosed in the capsule in an essentially airtight manner, wherein the housing and/or the closing element comprises at least one barrier layer, which barrier layer is essentially impermeable to oxygen. Preferably, the housing is manufactured during step A) by co-injecting various essentially compostable, liquefied materials into a mould, after which the housing is cooled to a temperature below the lowest melting temperature of the materials. In general, injection of various materials into the mould is carried out successively, so that an already-injected material layer can cool to become shape-retaining before one or a plurality of successive material layers are injected into the mould. Instead of co-injection, the housing can also be manufactured by means of thermoforming, generally of a laminate manufactured by co-extrusion.

Manufacturing of the film during step B) is preferably conducted in partial steps. In a first partial step, the various polymer film layers, including at least one carrier layer and at least one oxygen barrier layer, are first connected to one another, for example by fusing and/or gluing. In a subsequent partial step, at least one carrier layer is weakened, preferably by means of laser perforation of the at least one carrier layer. In this case, the laser should preferably not damage the oxygen barrier layer. The initial perforation of the at least one carrier layer and subsequent gluing of the carrier layer to a further film layer should cause the created openings (perforations) to fill with still-liquid glue, which would counteract formation of the desired weakened area of the carrier layer. It is therefore preferred to complete manufacturing of the laminate before making layer-selective and site-selective perforations in the laminate.

The invention further relates to an assembly of a capsule according to the invention and a device for preparing beverages, which device comprises a capsule holder for holding the capsule. In this case, the capsule holder should generally comprise a plurality of holder parts which are moveable with respect to one another between an open position in which the capsule can be placed in the capsule holder and a closed position in which the engaging edge and the sealing element of the capsule are clamped by the holder parts in an essentially fluid-impermeable manner.

The invention also concerns the use of a capsule according to the invention in a device for preparing beverages.

Embodiments of the invention are set out in the non-limitative set of clauses presented below:

### Clauses

1. Capsule for preparing beverages, comprising:
   - an essentially closed housing which is at least partially filled with a substance to be extracted and/or dissolved, such as ground coffee, for preparing a beverage, wherein the housing is essentially closed, wherein the housing is defined at least by a peripheral wall, an end side connected to the peripheral wall, and a laterally protruding engaging edge connected to the peripheral wall at a distance from the end side in order to allow the capsule to be clamped into a capsule holder of a device for preparing beverages; and
   - at least one essentially closed closing element connected to the laterally protruding engaging edge for sealing the substance into the capsule in order to preserve it,
   wherein at least a part of the closing element is composed of a laminated film comprising a plurality of polymer layers, which film comprises at least one polymer oxygen barrier layer, which barrier layer is essentially impermeable to oxygen, and which film comprises at least one polymer carrier layer connected to the oxygen barrier layer, wherein at least one carrier layer is provided with at least one weakened area.
2. Capsule according to Clause 1, wherein the oxygen barrier layer is closed.
3. Capsule according to Clause 2, wherein the oxygen barrier layer is not weakened.
4. Capsule according to one of the previous clauses, wherein a plurality of carrier layers of the film are weakened.
5. Capsule according to Clause 4, wherein the weakened carrier layers are configured adjacent to one another.
6. Capsule according to one of the previous clauses, wherein the at least one weakened carrier layer is perforated.
7. Capsule according to Clause 6, wherein the perforations are made in a pattern in the at least one weakened carrier layer.
8. Capsule according to Clause 6 or 7, wherein the pattern is composed of a plurality of broken lines essentially oriented in parallel.
9. Capsule according to one of Clauses 6-8, wherein each perforation is elongated.
10. Capsule according to one of the previous clauses, wherein at least one weakened carrier layer faces toward the substance held in the housing.
11. Capsule according to one of the previous clauses, wherein the film is configured so as to tear as a result of pressure build-up in the capsule when water is injected into the capsule.
12. Capsule according to one of the previous clauses, wherein the film forms an outlet side of the capsule.
13. Capsule according to one of the previous clauses, wherein the end side of the housing forms an inlet side of the capsule.
14. Capsule according to one of the previous clauses, wherein the layers of the film are connected to one another in such a way that the film forms a composite.
15. Capsule according to one of the previous clauses, wherein at least two adjacent film layers are glued together.
16. Capsule according to one of the previous clauses, wherein the film is essentially fully compostable.
17. Capsule according to one of the previous clauses, wherein at least one carrier layer is composed of a non-woven fabric (non-woven) and/or a woven fabric (woven).
18. Capsule according to one of the previous clauses, wherein the layer composed of a non-woven fabric (non-woven) and/or a woven fabric (woven) is essentially impermeable to solid components of the substance enclosed in the capsule.
19. Capsule according to Clause 17, wherein the carrier layer composed of a non-woven fabric (non-woven) and/or a woven fabric (woven) is composed of polylactic acid (PLA) and/or cellulose.
20. Capsule according to one of the previous clauses, wherein the oxygen barrier layer is at least partially composed of a material selected from the group composed of: polyvinyl alcohol (PVOH), polyvinylpyrrolidone (PVP), and polyvinyl acetate (PVAc).
21. Capsule according to one of the previous clauses, wherein the oxygen barrier layer is at least partially composed of an organic fraction (R), and an inorganic fraction, wherein the inorganic fraction preferably is composed of silicon alkoxide (Si(OR)4).
22. Capsule according to one of the previous clauses, wherein the oxygen barrier layer is essentially impermeable to water vapour.
23. Capsule according to one of the previous clauses, wherein the film comprises at least one shielding layer connected to a side of the oxygen barrier layer facing away from the substance.
24. Capsule according to Clause 23, wherein the shielding layer forms a moisture barrier layer.
25. Capsule according to Clause 23 or 24, wherein the shielding layer is at least partially composed of cellulose.
26. Capsule according to one of Clauses 23-25, wherein the shielding layer is configured in a closed position.
27. Capsule according to one of Clauses 23-26, wherein the shielding layer functions as a carrier layer for the oxygen barrier.
28. Capsule according to one of Clauses 23-27, wherein the at least one surrounding material completely shields the oxygen barrier layer from an atmosphere surrounding the capsule.
29. Capsule according to one of the previous clauses, wherein the oxygen barrier layer is essentially fully enclosed by other layers of the film.
30. Capsule according to one of the previous clauses, wherein the capsule is at least partially composed of at least one bio-based material.
31. Capsule according to one of the previous clauses, wherein the closing element is glued to the housing, preferably by application of an essentially fully compostable glue.
32. Capsule according to Clause 31, wherein the glue contains 1 to 70 wt% of a compostable polymer selected from the group composed of: an aliphatic or partially aromatic polyester and a thermoplastic aliphatic polyester urethane.
33. Capsule according to one of the previous clauses, wherein the housing is at least partially composed of polylactic acid (PLA) and/or cellulose.
34. Capsule according to one of the previous clauses, wherein the housing is composed of a laminate of a plurality of material layers, wherein at least one material layer is composed of an oxygen barrier layer.
35. Capsule according to Clause 34, wherein the oxygen barrier layer is enclosed by at least two surrounding material layers.
36. Capsule according to one of the previous clauses, wherein the engaging edge is connected to an end of the peripheral wall facing away from the end side.
37. Capsule according to one of the previous clauses, wherein the peripheral wall has an essentially frustoconical design.
38. Capsule according to one of the previous clauses, wherein the housing is essentially rigid.
39. Closing element for use in a capsule according to one of the previous clauses, wherein at least a part of the closing element is composed of a laminated film, which film comprises at least one oxygen barrier layer, which barrier layer is essentially impermeable to oxygen, and which film comprises at least one carrier layer connected to the oxygen barrier layer, wherein at least one carrier layer is provided with at least one weakened area.
40. Method for manufacturing a capsule for preparing beverages, particularly a capsule according to one of Clauses 1-38, comprising the steps:
   A) manufacturing of a housing of the capsule from at least one preferably compostable material, wherein the housing is essentially closed, and wherein the housing is defined at least by a peripheral wall, an end side connected to the peripheral wall, and a laterally protruding engaging edge connected to the peripheral wall at a distance from the end side in order to allow the capsule to be clamped into a capsule holder of a device for preparing beverages;
   B) manufacturing of a laminated film, which film comprises at least one oxygen barrier layer, which oxygen barrier layer is essentially impermeable to oxygen, and which film comprises at least one carrier layer connected to the oxygen barrier layer, wherein at least one carrier layer is provided with at least one weakened area, and
   C) at least partial filling of the housing with a substance to be extracted and/or dissolved, such as ground coffee, for preparing a beverage; and
   D) connecting of the film to the housing in such a way that the substance is enclosed in the capsule in an essentially airtight manner.
41. Method according to Clause 40, wherein the housing is manufactured during step A) by co-injecting various essentially compostable, liquefied materials into a mould, after which the housing is cooled to a temperature below the lowest melting temperature of the materials.
42. Assembly of a capsule according to one of Clauses 1-38 and a device for preparing beverages, which device comprises a capsule holder for holding the capsule.
43. Assembly according to Clause 42, wherein the capsule holder comprises a plurality of holder parts which are moveable with respect to one another between an open position in which the capsule can be placed in the capsule holder and a closed position in which the engaging edge and the sealing element of the capsule are clamped in by the holder parts in an essentially fluid-impermeable manner.
44. Assembly according to Clause 43, wherein the end side of the housing, when closed, is perforated by the capsule holder.
45. Assembly according to Clause 44, wherein, when the capsule holder is closed, the film is perforated by the capsule holder as a result of pressure build-up in the capsule during injection of water into the housing.
46. Use of a capsule according to one of Clauses 1-38 in a device for preparing beverages.

The invention will be explained by means of the non-limiting working examples depicted in the following figures. Specifically:
- figure 1 shows a schematic depiction of a capsule according to the present invention,
- figure 2 shows a perspective view of a capsule according to the invention,
- figure 3 shows a cross section of the capsule according to figure 2,
- figure 4 shows a detailed cross section of the capsule according to figures 1 and 2,
- figure 5 shows a detailed cross section of the film used in the capsule according to figures 2-4,
- figure 6 shows a view of a perforation pattern made in the film according to figure 5,
- figure 7 shows a schematic depiction of a method for manufacturing a capsule according to the invention, and
- figure 8 shows a schematic cross section of an alternative film for use as a closing element for a capsule according to the invention.

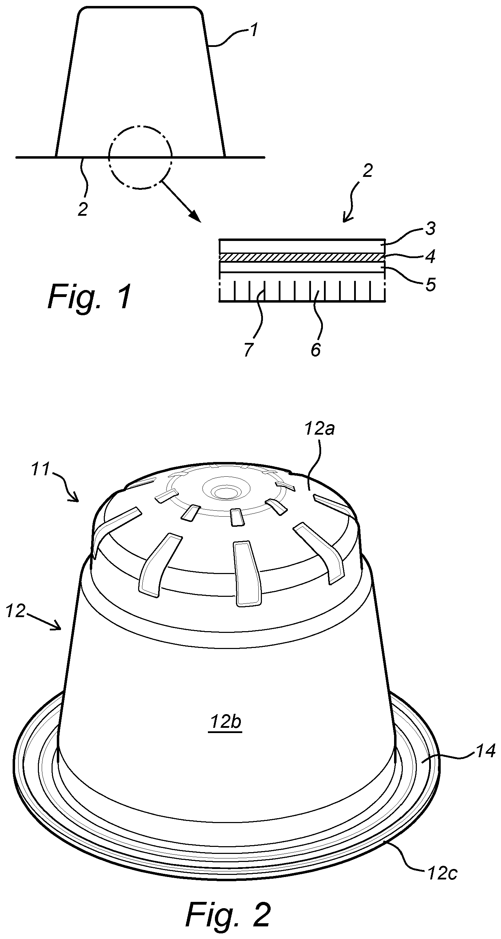

Figure 1 shows a schematic view of a capsule (1) provided with a closing film (2). The film is composed of a laminate of various layers (3, 4, 5, 6). The first layer is composed of an open structure such as a non-woven fabric (non-woven) and/or a woven fabric (woven), in which openings are made to weaken it compared to a fully closed layer and thus facilitate tearing of the film. This layer (3) is for example composed of compostable PLA and has a thickness of for example 1 to 10 microns. The second layer (4) is composed of an adhesive layer (4), for example a PLA-based adhesive, in order to connect the first layer (3) to the third layer (5). The second layer (4) preferably has a thickness of approximately 2 microns. The third layer (5) is composed of a compostable barrier layer of PVOH in order to keep the ingredients in the capsule (1) fresh. The fourth layer (6) is composed of a carrier (6), which is composed of cellulose or PLA. This layer (6) has a thickness of between 20 and 50 microns. The carrier (6) comprises a plurality of weakened areas (7), which are made for example by means of a laser. The weakened area extends over approximately 2/3 (two-thirds) of the thickness of the carrier (6). The first layer (3) can also function as a carrier layer.

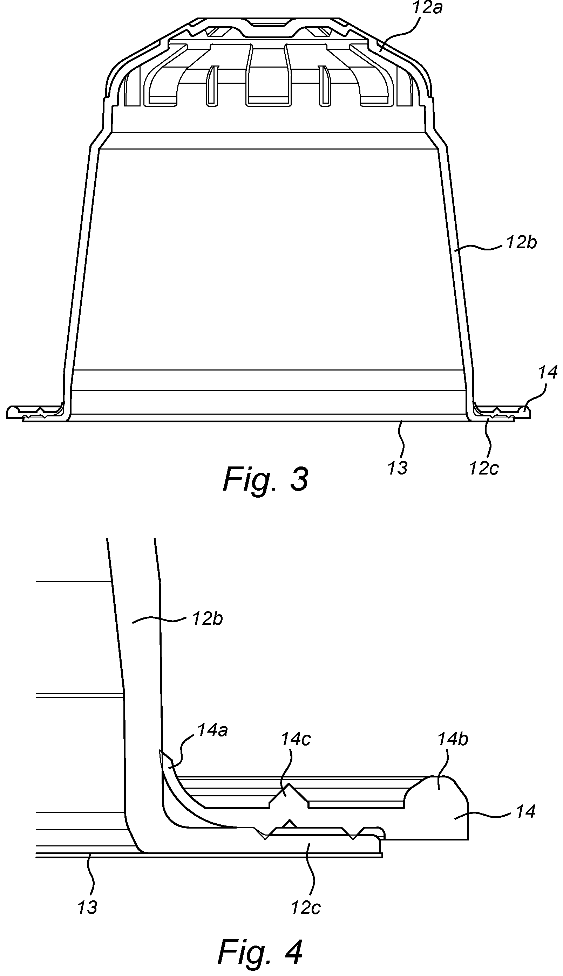

Figure 2 shows a perspective view of a capsule 11 according to the invention. Figure 3 shows a cross section of the capsule 11 according to figure 1. The initially essentially closed capsule 11 comprises a housing 12, which has an essentially closed end side 12a, a frustoconical peripheral wall 12b adjacent to the end side 12a, and a laterally protruding engaging edge 12c (or flange) adjacent to the frustoconical peripheral wall 12b. This housing 12 is filled with coffee (not shown) and forms the basis of the capsule 11. The housing 12 is manufactured by co-injection technology, with the result that the housing 12 is composed of an (integrated) laminate of two material layers composed of PLA between which a material layer manufactured from PVOH is configured. This composition is fully compostable. Preferably, the PLA layers are in the amorphous state. The PLA layers fully enclose the PVOH layer. The PLA layers function specifically as a moisture barrier, while the PVOH layer functions as an oxygen barrier. An (under)side of the engaging edge 12c facing away from the end side 12a is connected to an essentially compostable film 13 in order to enclose the coffee in the housing 12 in an essentially medium-tight manner. An upper side of the engaging edge 12a is connected to a surface-mounted sealing ring 14 (see figure 4). The sealing ring 14 determines the maximum diameter of the capsule 11, as the latter protrudes with respect to the peripheral edge of the engaging edge 12c. The sealing ring 14 is composed of one or a plurality of additives, such as talc, including amorphous PLA, and is therefore essentially fully compostable. As shown in figure 4, the sealing ring 14 is fused by means of two concentric weld seams 15a, 15b to the engaging edge 12c. An innermost peripheral edge 14a of the sealing ring 14 is not connected to the housing 12 and extends out in an upward direction. An outermost peripheral edge 14b of the sealing ring 14 is also free and not connected to the engaging edge 12c. These free ends 14a, 14b facilitate positioning of the sealing ring 14 during clamping of the capsule 11 into a capsule holder, which is beneficial to the sealing capacity of the sealing ring 14. Between the free ends 14a, 14b, the sealing ring 14 is provided with a raised circular water-repellent edge 14c which further improves the sealing effect.

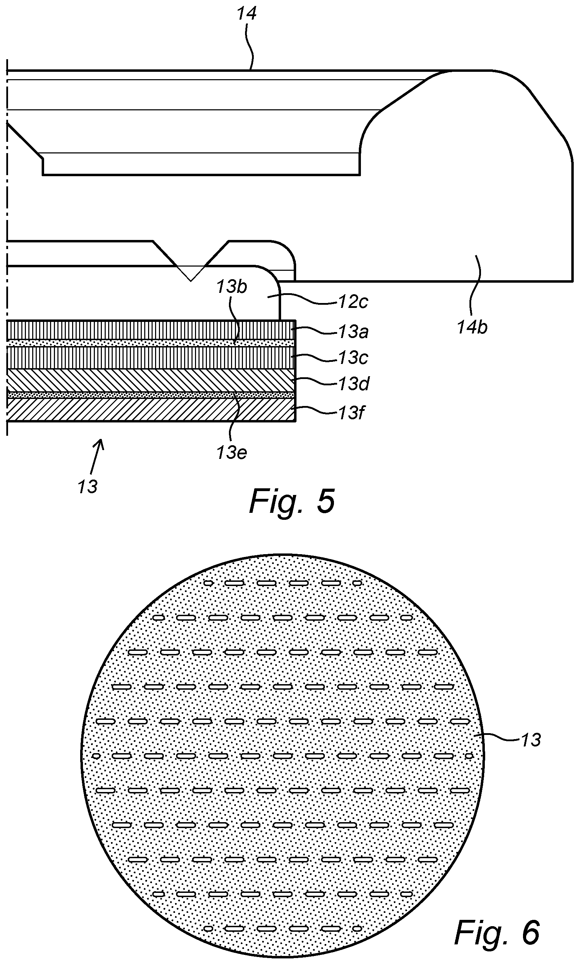

The film 13 closes off the housing 12 in an essentially airtight manner and is composed of an essentially fully compostable multi-layer composite, and is composed successively, as shown in figure 5, of a non-woven fabric (non-woven) 13a composed of PLA, a single-component glue layer 13b, an intermediate layer 13c at least partially composed of PLA, an oxygen barrier layer 13d composed of PVOH, a (two-component) glue layer 13e, and an outer layer 13f at least partially composed of cellulose having a thickness of about 14 microns. The non-woven fabric 13a, the intermediate layer 13c at least partially composed of PLA, and the outer layer at least partially composed of cellulose can be considered to be carrier layers. The three innermost layers, the non-woven layer 13a, the glue layer 13b, and the PLA layer 13c, are processed by means of an infrared laser, causing a hole pattern to be made (only) in these layers 13a-13c, which weakens them, with the result that the film 13 will tear more easily during use. The point or line-shaped perforations preferably have a thickness of 0.3 mm and are arranged in 11 rows, as also shown in figure 6. The outermost film layers, particularly the cellulose layer 13f and the oxygen barrier layer 13d, are not configured in a weakened manner and remain fully intact during the laser processing.

The non-woven fabric and/or woven fabric 13a preferably has a thickness of between 1 and 10 microns. The cellulose layer 13f is preferably between 20 and 50 microns thick, and more preferably between 30 and 40 microns thick. The intermediate PLA-based stiffening layer 13c is preferably about 20 microns thick. The oxygen barrier 13d is relatively thin, and is generally applied as a coating to an adjacent film layer, wherein the thickness of the oxygen barrier is preferably between 1 and 5 microns, and more preferably about 2 microns. The weakened areas therefore preferably extend over approximately half of the thickness of the film 13. In cases where a plurality of weakened areas is present, these areas can be applied in a pattern or randomly distributed over the carrier layer. For example, in order to allow the outflow of coffee over the entire surface of the film, the weakened areas should preferably also extend over the entire (outflow) surface of the film. This (outflow) surface is limited by the inner periphery of the engaging element 14.

The use of the capsule for preparing coffee can be described as follows. The capsule 1 is clamped into an opened capsule holder (not shown), after which the capsule holder is closed. During the closing of the capsule holder, the engaging edge 12c and the sealing ring 14 attached thereto are clamped in. During this clamping, the end side 12a is to be perforated by perforating elements of the capsule holder, and the sealing ring 14 manufactured from amorphous PLA is to partially form around a clamping edge of the capsule holder, thus creating a seal. After this, hot water having a temperature of about 95 °C is fed into the capsule holder, and via the end side 12a, into the capsule 11. This increase in pressure causes the film 13 to be deformed and, as a result of the weakened areas (perforations) made in the layers facing toward the coffee (13a-13c) of the film 13, to undergo controlled tearing on interaction with a perforation plate which is part of the capsule holder. By means of this perforation plate, the coffee can be caused to flow out of the capsule 11 and into the cup. During this extraction process, the sealing ring 14 will partially crystallise as a result of "cold crystallisation" into semi-crystalline form. Above the glass transition temperature (Tg) of PLA of about 55-60 °C, moreover, the ring 14 will become somewhat rubbery, which improves the sealing effect. After the extraction process, the temperature of the sealing ring 14 will drop fairly quickly to below the aforementioned glass transition temperature, with the result that a relatively stiff, semi-crystalline sealing ring 14 is obtained.

Because of the increased stiffness compared to its initial amorphous state, the sealing ring 14, and thus the capsule 11, can fairly easily be removed from the capsule holder.

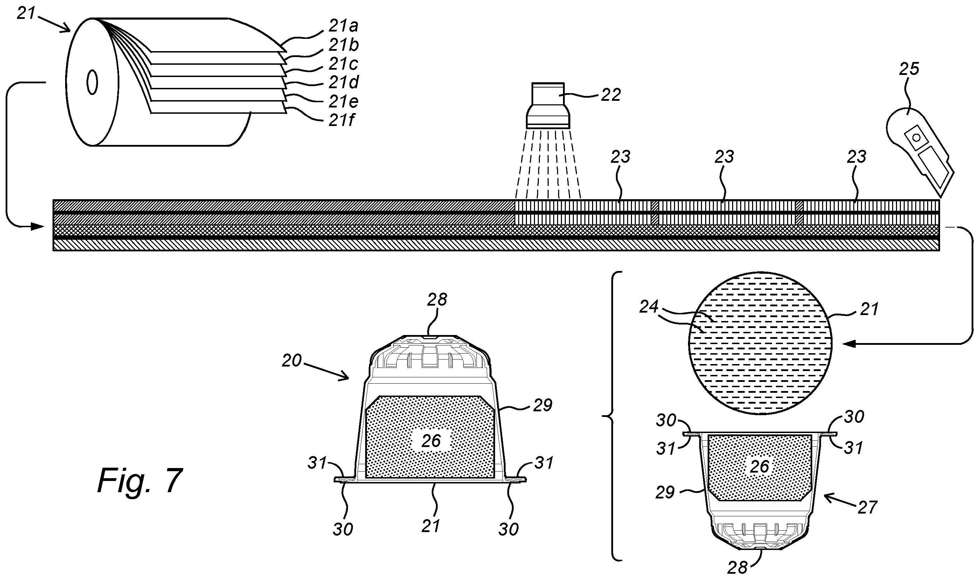

Figure 7 shows a schematic depiction of a method for manufacturing a capsule 20 according to the invention. In manufacturing the capsule 20, a laminated plastic film 21 is produced. The film 21 comprises a plurality of plastic-containing layers 21a-21f, which are described separately in the following.

An uppermost layer 21a, as shown in figure 7, is composed of a non-woven fabric (also referred to as "non-woven" or a "web") or a woven fabric (also referred to as a "woven"). A non-woven fabric (non-woven) is a textile material that is neither woven nor knit. In this case, no yarn is used; rather, the material is directly layered into a non-woven fabric as a fibre or filament, and the layers are then attached to one another. In this case, the fibres or filaments may be oriented or non-oriented (oriented or non-oriented non-wovens). The structure may differ widely. It ranges from barely connected to very strongly connected, supple to stiff, and compact to highly voluminous. The fibres or filaments may be attached to one another by various methods, such as mechanical methods (fibres are crocheted or felted to one another using barbed needles), chemical methods (fibres are attached to one another using adhesives such as glue), or thermal methods (fibres are melted or fused with application of a glue or adhesive). The thickness of this non-woven fabric 21a may vary, but is preferably between 1 and 10 microns. The weight of the non-woven fabric is preferably between 10 and 30 grams per square meter. The tensile strength of the non-woven fabric, expressed as MD:CD ratio (wherein MD stands for "machine direction" and CD for "cross direction") is preferably between 2.5 and 5. The non-woven fabric 21a is by nature an open or porous structure. The non-woven fabric 21a is preferably at least partially composed of an anisotropic polymer and/or a thermoplastic polymer, preferably a polyester, and more preferably polylactic acid (PLA). PLA is biodegradable in industrial composting facilities. Instead of a non-woven fabric 21a, a woven fabric may also be used.

A subsequent layer 21b is composed of a glue layer. A compostable adhesive is preferably used in this case. A suitable compostable adhesive is for example a pressure-sensitive adhesive ("PSA") that contains poly(D,L-lactide-co-glycolide-co-c-caprolactone). Alternatively, one may use a terpolymer blend comprising poly(D,L-lactide-co-glycolide-co-c-caprolactone) together with another poly(D,L-lactide-co-glycolide-co-c-caprolactone) or together with a poly(D,L-lactide-co-glycolide-co-mPEG). Of course, conceivable alternative adhesives may also be used.

The third layer 21c relates to an intermediate polymer layer, preferably composed of a thermoplastic polymer, preferably a polyester, and more preferably polylactic acid (PLA) or polyethylene terephthalate (PET). The thickness of this intermediate polymer layer 21c is preferably between 10 and 30 microns, and in this working example is 20 microns.

A fourth layer 21d relates to an oxygen barrier layer. This layer is relatively thin and is preferably applied to the third layer 21c during the manufacturing process of the film 21, preferably by means of vapour deposition. Because of the low thickness, preferably between 1 and 5 microns, and more preferably about 2 microns, of the oxygen barrier layer 21d, one can also speak of a coating. The oxygen barrier layer 21d is preferably at least partially composed of a compostable material selected from the group composed of polyvinyl alcohol (PVOH), polyvinylpyrrolidone (PVP), and polyvinyl acetate (PVAc). PVOH is generally the most preferred of these substances, as PVOH can fairly easily be applied as a dense oxygen-impermeable film and has favourable adhesive properties. The oxygen barrier layer is preferably composed of a hybrid coating of an organic phase, for example formed by application of at least one of the aforementioned components, and an inorganic fraction which functions as a precursor. More preferably, the inorganic fraction is composed of silicon alkoxide (Si(OR)4), wherein R denotes an organic tail derived from one of the aforementioned organic molecules. Such hybrid coatings generally show particularly favourable compostability, and also show satisfactory oxygen impermeability. As a less environmentally-friendly alternative, the oxygen barrier layer can be composed for example of polyvinylidene chloride (PVdC), ethene vinyl alcohol (EVOH), or a metal oxide such as SiO₂ or Al₂O₃.

A fifth layer 21e of the film 21 is composed of a glue layer, and is preferably composed of a compostable glue layer. An important component of this glue layer (adhesive layer) may be soybean flour, which is used for example in combination with phenol resin, or is mixed with casein- or sodium silicate-based adhesives.

The aforementioned adhesive layer 21e is applied in order to glue the oxygen barrier layer 21c to an outermost layer which is preferably composed of cellulose and/or PLA. The outermost layer 21e not only serves as a carrier layer which stiffens the film 21, but also shields the oxygen barrier layer 21c, making it possible to prevent damage to the oxygen barrier layer 21c. Moreover, this shielding leads to better preservation of the oxygen barrier layer 21c, as various oxygen barrier layers 21c are moisture-sensitive and disintegrate in a moist environment. By applying a moisture barrier layer 21e, such as for example cellulose or PLA, it becomes possible to keep the oxygen barrier layer 21c intact for a longer period of time, with the result that the substance can be preserved longer in the capsule.

The non-woven fabric 21a, the intermediate layer 21c, and the shielding underlayer 21f function as carrier layers for the oxygen barrier layer 21d.

After manufacturing the film 21, the film 21 is processed using an infrared laser 22 in such a way that the non-woven fabric 21a, the intermediate layer 21c, and the glue layer 21b between them - also referred to collectively as the top layer - are perforated. The underlying layers 21d-21f are not exposed to the laser and thus remain intact, with the result that the film 21 is initially virtually impermeable to oxygen /gas. The laser 22 makes the perforations in the top layer 21a-21c in circular patterns 23, wherein each circular pattern 23 is composed of a plurality of broken lines arranged in parallel 24, wherein each line is composed of elongated perforations positioned at intervals from one another. In this case, the dimensioning of each perforation is particularly small, and they have a typical micron-order length and width. The interval between adjacent lines 24 is preferably between 0.1 and 2 millimetres. After the perforations have been made in the film 21, the film 21 is cut using a cutting element 25 such as for example another laser, a punch, or a knife in such a way that circular (disk-shaped) film parts are formed which are to function as a closing element 25 for a capsule.

After manufacturing of the closing element formed by the processed film 21, the closing element is to be applied to a housing 27 filled with ground coffee 26 (and/or some other beverage component). In this case, the housing 27 is cup-shaped and configured in an essentially shape-retaining manner. The housing 27 comprises a closed inlet side 28 (end side), a tapered side wall 29, and a laterally protruding flange 30 which functions as an engaging edge. A sealing ring 31 is applied to the side of the flange 30 facing toward the side wall 29. The ring 31 is preferably inseparably connected to the flange 30. A more detailed description of the housing 27 and the ring 30 applied thereto is described in international patent application number PCT/IB2014/002648 of the applicant, not pre-published, the contents of which are incorporated herein by reference as constituting part of the contents of the present patent. The film 21 is glued and/or welded to the flange 30, with the result that the coffee is packed into the capsule in an airtight manner. The film 21 is oriented in such a way that the perforated top layer faces toward the coffee 26. The film 21 functions as the outlet side of the capsule 27.

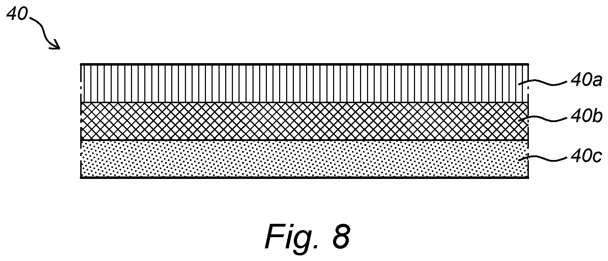

Figure 8 shows a schematic cross section of an alternative film 40 for use as a closing element for a capsule according to the invention (not shown). The film 40 is essentially fully manufactured from plastic and is composed of three layers 40a, 40b, 40c. An uppermost layer 40a is composed of a damaged layer. The damage may be of various kinds, and may consist for example of a local decrease in layer thickness, one or a plurality of perforations, one or a plurality of roughened or torn surfaces, or a combination thereof. Because of the damage, the uppermost layer 40a is relatively weak and will tear fairly quickly when subjected to stress. The uppermost layer 40a may be composed of PLA, possibly enriched with one or a plurality of additives. The middle layer 40b is composed of a relatively thin oxygen barrier layer, for example manufactured - at least partially - from PVOH. A lowermost layer 40c provides the film 40 with the desired stiffness. This lowermost layer 40c may, at least partly, be composed of PLA and/or cellulose. Both the uppermost layer 40a and the lowermost layer 40c play a role in directly or indirectly supporting the oxygen barrier 40b, and are therefore deemed to be carrier layers in the context of this patent. All of the layers are fused together under the effect of heat during a laminating process. Of course, glue may also be used if desired. As an alternative to the film 21 shown in figure 8, one may select a two-layer film, comprising a preferably moisture-impermeable oxygen barrier layer and a weakened carrier layer connected thereto. The carrier layer may form an inner side of the film, wherein the carrier layer faces toward a substance held by the capsule, but may also be configured on an outer side, wherein the oxygen barrier faces toward the substance held in the capsule and the carrier layer is not in direct contact with the aforementioned substance.

It will be apparent that the invention is not limited to the working examples shown and described herein, but that numerous variants are possible within the scope of the attached claims that will be obvious to a person skilled in the art.

The above-described inventive concepts are illustrated by several illustrative embodiments. It is conceivable that individual inventive concepts may be applied without, in so doing, also applying other details of the described example. It is not necessary to elaborate on examples of all conceivable combinations of the above-described inventive concepts, as a person skilled in the art will understand numerous inventive concepts can be (re)combined in order to arrive at a specific application.

## Claims

1. Capsule (1, 11, 20) for preparing beverages, comprising:
- an essentially closed housing (12, 27) which is at least partially filled with a substance to be extracted and/or dissolved, such as ground coffee, for preparing a beverage, wherein the housing (12, 27) is essentially closed, wherein the housing (12, 27) is defined at least by a peripheral wall (12b, 29), an end side (12a, 28) connected to the peripheral wall (12b, 29), and a laterally protruding engaging edge (12c, 30) connected to the peripheral wall (12b, 29) at a distance from the end side (12a, 28) in order to allow the capsule (1, 11, 20) to be clamped into a capsule holder of a device for preparing beverages; and
- at least one essentially closed closing element (2, 13, 21, 40) connected to the laterally protruding engaging edge (12c, 30) for sealing the substance into the capsule (1, 11, 20) in order to preserve it,
wherein at least a part of the closing element (2, 13, 21, 40) is composed of a laminated, essentially fully compostable film (2, 13, 21, 40) comprising a plurality of polymer layers (3, 5, 6, 13a, 13c, 13d, 13f, 21a-21f, 40a, 40b, 40c), which film (2, 13, 21, 40) comprises at least one polymer oxygen barrier layer (5, 13d, 21d, 40b), which barrier layer (5, 13d, 21d, 40b) is essentially impermeable to oxygen, and which film (2, 13, 21, 40) comprises at least one polymer carrier layer (6, 13a, 13c, 13f, 21a, 21c, 21f) connected to the oxygen barrier layer (5, 13d, 21d, 40c), wherein said carrier layer (6, 13a, 13c, 13f, 21a, 21c, 21f, 40a, 40c) is composed of a non-woven, and wherein said non-woven carrier layer (6, 13a, 13c, 13f, 21a, 21c, 21f, 40a, 40c) is composed from polylactic acid (PLA) and/or cellulose.

2. Capsule (1, 11, 20) according to claim1, wherein the non-woven has an open structure.

3. Capsule (1, 11, 20) according to claim 1 or 2, wherein the film comprises a plurality of carrier layers (6, 13a, 13c, 13f, 21a, 21c, 21f, 40a, 40c).

4. Capsule (1, 11, 20) according to one of the previous claims, wherein the at least one carrier layer (6, 13a, 13c, 13f, 21a, 21c, 21f, 40a, 40c) is perforated.

5. Capsule (1, 11, 20) according to one of the previous claims, wherein at least one carrier layer (6, 13a, 13c, 13f, 21a, 21c, 21f, 40a, 40c) is provided with site-selective zones of reduced layer thickness.

6. Capsule (1, 11, 20) according to one of the previous claims, wherein at least one carrier layer (6, 13a, 13c, 13f, 21a, 21c, 21f, 40a, 40c) faces toward the substance held in the housing (12, 27).

7. Capsule (1, 11, 20) according to one of the previous claims, wherein the film (2, 13, 21, 40) is configured so as to tear as a result of pressure build-up in the capsule (1, 11, 20) when water is injected into the capsule(1, 11, 20).

8. Capsule (1, 11, 20) according to one of the previous claims, wherein the layers (3, 5, 6, 13a, 13c, 13d, 13f, 21a-21f, 40a, 40b, 40c) of the film (2, 13, 21, 40) are connected to one another in such a way that the film (2, 13, 21, 40) forms a composite.

9. Capsule (1, 11, 20) according to one of the previous claims, wherein the non-woven is essentially impermeable to solid components of the substance enclosed in the capsule (1, 11, 20).

10. Capsule (1, 11, 20) according to one of the previous claims, wherein the oxygen barrier layer (5, 13d, 21d, 40b) is essentially impermeable to water vapour.

11. Capsule (1, 11, 20) according to one of the previous claims, wherein the film (2, 13, 21, 40) comprises at least one shielding layer (21f) connected to a side of the oxygen barrier layer (5, 13d, 21d, 40b) facing away from the substance, wherein the shielding layer (21f) preferably forms a moisture barrier layer.

12. Capsule (1, 11, 20) according to one of the previous claims, wherein the oxygen barrier layer (5, 13d, 21d, 40b) is essentially fully enclosed by other layers of the film (2, 13, 21, 40).

13. Capsule (1, 11, 20) according to any of the previous claims, wherein the non-woven carrier layer (6, 13a, 13c, 13f, 21a, 21c, 21f, 40a, 40c) is an oriented non-woven carrier layer (6, 13a, 13c, 13f, 21a, 21c, 21f, 40a, 40c) in which fibres or filaments are oriented.

14. Capsule (1, 11, 20) according to any of the previous claims, wherein the non-woven has a tensile strength, expressed as the ratio of machine direction (MD) to cross direction (CD), of between 2.5 and 5.

15. Capsule (1, 11, 20) according to any of the previous claims, wherein the non-woven carrier layer (6, 13a, 13c, 13f, 21a, 21c, 21f, 40a, 40c) has a weight of between 10 and 30 grams per square meter.

16. Capsule (1, 11, 20) according to any of the previous claims, wherein the thickness of the non-woven carrier layer (6, 13a, 13c, 13f, 21a, 21c, 21f, 40a, 40c) is between 1 and 10 microns.

17. Capsule (1, 11, 20) according to any of the previous claims, wherein the non-woven carrier layer (6, 13a, 13c, 13f, 21a, 21c, 21f, 40a, 40c) is at least partially composed of an anisotropic polymer and/or a thermoplastic polymer.

18. Capsule (1, 11, 20) according to one of the previous claims, wherein the closing element (2, 13, 21, 40) is glued to the housing (2, 27), preferably by application of an essentially fully compostable glue.

19. Capsule (1, 11, 20) according to one of the previous claims, wherein the housing (12, 27) is at least partially composed of polylactic acid (PLA) and/or cellulose.

20. Capsule (1, 11, 20) according to one of the previous claims, wherein the housing (12, 27) is composed of a laminate of a plurality of material layers.

21. Capsule (1, 11, 20) according to claim 20, wherein the laminate of the housing (12, 27) includes a material layer composed of compostable polyester, in particular polybutylene adipate co-terephthalate and/or wherein the laminate of the housing (12, 27) comprises a natural polymer, and wherein, preferably, each material layer of the laminate of the housing (12, 27) is essentially compostable.

22. Capsule (1, 11, 20) according to one of claims 21-24, wherein at least one material layer of the laminate of layers of the housing (12, 27) is composed of an oxygen barrier layer.

23. Capsule (1, 11, 20) according to one of the previous claims, wherein the engaging edge (12c, 30) is connected to an end of the peripheral wall (12b, 29) facing away from the end side.

24. Capsule (1, 11, 20) according to one of the previous claims, wherein the capsule (1, 11, 20) is made essentially solely of a compostable bio-based material.

25. Capsule (1, 11, 20) according to claim 24, wherein the bio-based material comprises polybutylene adipate co-terephthalate and/or biodegradable polyester.

26. Closing element for use in a capsule (1, 11, 20) according to one of the previous claims, wherein at least a part of the closing element (2, 13, 21, 40) is composed of a laminated, essentially fully compostable film (2, 13, 21, 40), which film (2, 13, 21, 40) comprises at least one oxygen barrier layer (5, 13d, 21d, 40b), which barrier layer (5, 13d, 21d, 40b) is essentially impermeable to oxygen, and which film (2, 13, 21, 40) comprises at least one carrier layer (6, 13a, 13c, 13f, 21a, 21c, 21f) connected to the oxygen barrier layer (5, 13d, 21d, 40b), wherein said at least one carrier layer (6, 13a, 13c, 13f, 21a, 21c, 21f, 40a, 40c) is composed of a non-woven, and wherein said non-woven carrier layer (6, 13a, 13c, 13f, 21a, 21c, 21f, 40a, 40c) is composed of cellulose.
